# EUROPÄISCHE PATENTSCHRIFT

(11) **EP 2 137 225 B1**
(45) Veröffentlichungstag und Bekanntmachung des Hinweises auf die Patenterteilung: **03.12.2014**
(21) Anmeldenummer: 08717819.0
(22) Anmeldetag: 14.03.2008
(51) Int. Cl.: C08G 18/08, C08G 18/28, C08G 18/32, C08G 18/34, C08G 18/38, C08G 18/42, C08G 18/66, C08G 18/72, C08G 18/79, C09D 175/04, D06M 15/564, C14C 11/00, C08K 7/22, C08L 75/04, D06M 23/12, C08L 83/00

(54) **WÄSSRIGE DISPERSIONEN, ENTHALTEND POLYURETHAN, UND IHRE VERWENDUNG ZUR HERSTELLUNG VON FLÄCHIGEN SUBSTRATEN**
AQUEOUS DISPERSIONS COMPRISING POLYURETHANE AND THE USE THEREOF FOR THE PRODUCTION OF FLAT SUBSTRATES
DISPERSIONS AQUEUSES CONTENANT DU POLYURÉTHANNE ET LEUR UTILISATION POUR LA FABRICATION DE SUBSTRATS PLANS

(30) Priorität: 21.03.2007 EP 07104557; 26.03.2007 EP 07104899
(43) Veröffentlichungstag der Anmeldung: 30.12.2009
(73) Patentinhaber: BASF SE, 67056 Ludwigshafen (DE)
(72) Erfinder: BUSTOS, Nidia, 68309 Mannheim (DE); WEISER, Jürgen, 69198 Schriesheim (DE)
(86) Internationale Anmeldenummer: PCT/EP2008/053077
(87) Internationale Veröffentlichungsnummer: WO 2008/113755

(56) Entgegenhaltungen:
- EP-A- 0 122 552
- EP-A- 1 050 551
- WO-A-2005/047549

## Beschreibung

Die vorliegende Erfindung betrifft wässrige Dispersionen, enthaltend
(A) mindestens ein Polyurethan,
(B) mindestens eine Verbindung der allgemeinen Formel I a oder I b 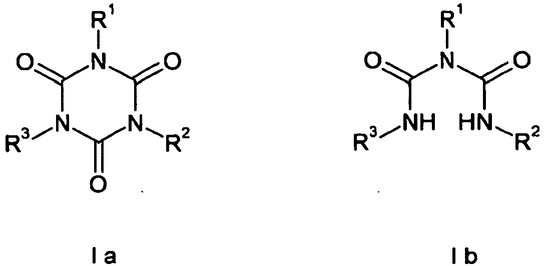
   wobei R¹, R² und R³ gleich oder verschieden sein können und gewählt werden aus
   A¹-NCO und A¹-NH-CO-X, wobei
   A¹ ein Spacer mit 2 bis 20 C-Atomen ist und
   X gewählt wird O(AO)ₓR⁴,
   AO ist C₂-C₄-Alkylenoxid,
   x ist eine ganze Zahl im Bereich von 1 bis 50 und
   R⁴ ist gewählt aus Wasserstoff und C₁-C₃₀-Alkyl,
(C) und mindestens eine Silikonverbindung mit reaktiven Gruppen, wobei Silikonverbindung (C) gewählt wird aus Silikonverbindungen mit ein bis vier Aminogruppen pro Molekül, Silikonverbindungen mit ein bis vier Aminoalkylaminogruppen pro Molekül und Silikonverbindungen mit ein bis vier COOH-Gruppen pro Molekül.

Wässrige silikonhaltige Dispersionen finden zahlreiche Anwendungen. So werden sie beispielsweise zur Hydrophobierung von flächigen Substraten wie beispielsweise Textil oder Leder eingesetzt. Eine bestimmte Anwendung ist dabei die Beschichtung von Leder mit Hilfe eines Umkehrbeschichtungsverfahrens, wie es beispielsweise in WO 05/47549 offenbart ist. Dabei spielt die Deckschicht, mit der das Leder beschichtet wird, für die haptischen Eigenschaften eine entscheidende Rolle.

Aus DE 20 2006 007 957 U1 ist bekannt, dass sich zugerichtete Leder unter Verwendung von Silikondispersionen herstellen lassen, die Partikel mit einem mittleren Durchmesser zwischen 3 µm und 13 µm aufweisen und die einer Polyurethandispersion zugeschlagen werden, die als Deckschicht im Umkehrverfahren auf das zu beschichtende Leder aufgetragen wird. Die Echtheiten, insbesondere die dauerhaften Griffechtheiten, von derartig beschichteten Ledern können jedoch noch verbessert werden. Außerdem lässt sich die Verwendbarkeit der Matrizen noch verbessern.

EP 122 522 offenbart wässrige Zubereitungen für Beschichtungen von Textilien als flächigem Substrat nach dem Umkehrverfahren, die eine Polyurethandispersion, Silikone mit Hydroxylgruppen und als ein Vernetzungsmittel blockierte Isocyanurate auf HDI/TDI Basis enthalten.

Es bestand also die Aufgabe, Silikondispersionen bereit zu stellen, die sich für das Beschichten von Substraten insbesondere nach dem Umkehrverfahren eignen. Es bestand weiterhin die Aufgabe, beschichtete Substrate mit guten Echtheiten, insbesondere Reibechtheiten, und gutem Griff bereit zu stellen. Es bestand weiterhin die Aufgabe, ein Verfahren zur Herstellung von beschichteten Substraten bereit zu stellen, dass die vorstehend genannten beschichteten Substrate liefert und sich vorteilhaft ausführen lässt.

Dementsprechend wurden die eingangs definierten wässrigen Dispersionen gefunden.

Erfindungsgemäße wässrige Dispersionen enthalten
(A) mindestens ein Polyurethan, das im Rahmen der vorliegenden Erfindung auch als Polyurethan (A) bezeichnet wird.

Bei Polyurethan (A) handelt es sich vorzugsweise um ein thermoplastisches Polyurethan. Thermoplastische Polyurethane (kurz auch als TPU bezeichnet) und daraus hergestellte Dispersionen sind als solche bekannt.

Polyurethane (A) sind allgemein bekannt, kommerziell erhältlich und bestehen im allgemeinen aus einer Weichphase aus höhermolekularen Polyhydroxylverbindungen, z.B. aus Polyester- oder Polyethersegmenten, und einer Urethan-Hartphase, gebildet aus niedermolekularen Kettenverlängerungsmitteln und Di- oder Polyisocyanaten.

Verfahren zur Herstellung von Polyurethanen (A) sind allgemein bekannt. Im allgemeinen werden Polyurethane (A) durch Umsetzung von
(a) Isocyanaten, bevorzugt Diisocyanaten mit
(b) gegenüber Isocyanaten reaktiven Verbindungen, üblicherweise mit einem Molekulargewicht (M_{w}) von 500 bis 10.000 g/mol, bevorzugt 500 bis 5.000 g/mol, besonders bevorzugt 800 bis 3.000 g/mol, und
(c) Kettenverlängerungsmitteln mit einem Molekulargewicht von 50 bis 499 gegebenenfalls in Gegenwart von
(d) Katalysatoren
(e) und/oder üblichen Zusatzstoffen hergestellt.

Im Folgenden sollen beispielhaft die Ausgangskomponenten und Verfahren zur Herstellung der bevorzugten Polyurethane (A) dargelegt werden. Die bei der Herstellung der Polyurethane üblicherweise verwendeten Komponenten (a), (b), (c) sowie gegebenenfalls (d) und/oder (e) sollen im Folgenden beispielhaft beschrieben werden:
Als Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendüsocyanat, 2-Methyl-pentamethylendiisocyanat-1,5, 2-Ethyl-butylen-düsocyanat-1,4, Pentamethylen-diisocyanat-1,5, Butylen-diisocyanat-1,4, 1-Isocyanato-3,3,5-trimethyl-5-isocyanato-methyl-cyclohexan (Isophorondiisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-di-isocyanat und/oder 4,4'-, 2,4'- und 2,2'-Dicyclohexylmethan-diisocyanat, 2,2'-, 2,4'-und/oder 4,4'-Diphenylmethandüsocyanat (MDI), 1,5-Naphthylendiisocyanat (NDI), 2,4- und/oder 2,6-Toluylendüsocyanat (TDI), Diphenylmethandiisocyanat, 3,3'-Dimethyldiphenyl-diisocyanat, 1,2-Diphenylethandiisocyanat und/oder Phenylendiisocyanat. Bevorzugt wird 4,4'-MDI verwendet. Bevorzugt sind zudem aliphatische Diisocyanate, insbesondere Hexamethylendiisocyanat (HDI), und besonders bevorzugt sind aromatische Diisocyanate wie 2,2'-, 2,4'- und/oder 4,4'-Diphenylmethandiisocyanat (MDI) und Mischungen der vorstehend genannten Isomere.

Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten (M_{w}) im Bereich von 500 und 8.000 g/mol, bevorzugt 600 bis 6.000 g/mol, insbesondere 800 bis 3.000 g/mol, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, 1,2-Propylenoxid und/oder 1,2-Butylenoxid, bevorzugt Polyetherole basierend auf Polyoxytetramethylen (Poly-THF), 1,2-Propylenoxid und Ethylenoxid. Polyetherole weisen den Vorteil auf, dass sie eine höhere Hydrolysestabilität als Polyesterole besitzen, und sind bevorzugt als Komponente (b), insbesondere zur Herstellung von weichen Polyurethanen (A1).

Als Polycarbonatdiole sind insbesondere aliphatische Polycarbonatdiole zu nennen, beispielsweise 1,4-Butandiol-Polycarbonat und 1,6-Hexandiol-Polycarbonat.

Als Polyesterdiole sind solche zu nennen, die sich durch Polykondensation von mindestens einem primären Diol, vorzugsweise mindestens einen primären aliphatischen Diol, beispielsweise Ethylenglykol, 1,4-Butandiol, 1,6-Hexandiol, Neopentylglykol oder besonders bevorzugt 1,4-Dihydroxymethylcyclohexan (als Isomerengemisch) oder Mischungen von mindestens zwei der vorstehend genannten Diole einerseits und mindestens einer, bevorzugt mindestens zwei Dicarbonsäuren oder ihren Anhydriden andererseits herstellen lassen. Bevorzugte Dicarbonsäuren sind aliphatische Dicarbonsäuren wie Adipinsäure, Glutarsäure, Bernsteinsäure und aromatische Dicarbonsäuren wie beispielsweise Phthalsäure und insbesondere Isophthalsäure.

Polyetherole werden bevorzugt durch Anlagerung von Alkylenoxiden, insbesondere Ethylenoxid, Propylenoxid und Mischungen daraus, an Diole wie beispielsweise Ethylenglykol, 1,2-Propylenglykol, 1,2-Butylenglykol, 1,4-Butandiol, 1,3-Propandiol, oder an Triole wie beispielsweise Glycerin, in Gegenwart von hochaktiven Katalysatoren hergestellt. Derartige hochaktive Katalysatoren sind beispielsweise Cäsiumhydroxid und Dimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetherol belassen werden, vorzugsweise wird er entfernt, beispielsweise durch Sedimentation oder Filtration.

Statt eines Polyols können auch Mischungen verschiedener Polyole eingesetzt werden.

Zur Verbesserung der Dispergierbarkeit kann man als gegenüber Isocyanaten reaktive Verbindungen (b) anteilig auch ein oder mehr Diole oder Diamine mit einer Carbonsäuregruppe oder Sulfonsäuregruppe (b') einsetzen, insbesondere Alkalimetall- oder Ammoniumsalze von 1,1-Dimethylolbutansäure, 1,1-Dimethylolpropionsäure oder

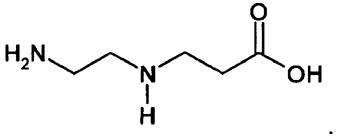

Als Kettenverlängerungsmittel (c) werden an sich bekannte aliphatische, araliphatische, aromatische und/oder cycloaliphatische Verbindungen mit einem Molekulargewicht von 50 bis 499 g/mol und mindestens zwei funktionellen Gruppen, bevorzugt Verbindungen mit genau zwei funktionellen Gruppen pro Molekül, eingesetzt, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen pro Molekül, bevorzugt entsprechende Oligo- und/oder Polypropylenglykole, wobei auch Mischungen an Kettenverlängerungsmitteln (c) eingesetzt werden können.

Besonders bevorzugt handelt es sich bei den Komponenten (a) bis (c) um difunktionelle Verbindungen, d.h. Diisocyanate (a), difunktionelle Polyole, bevorzugt Polyetherole (b) und difunktionelle Kettenverlängerungsmittel, bevorzugt Diole.

Geeignete Katalysatoren (d), welche insbesondere die Reaktion zwischen den NCO-Gruppen der Diisocyanate (a) und den Hydroxylgruppen der Aufbaukomponenten (b) und (c) beschleunigen, sind an sich bekannte tertiäre Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan ("DABCO") und ähnliche tertiäre Amine, sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Komponente (b) eingesetzt.

Neben Katalysator (d) können den Komponenten (a) bis (c) auch Hilfsmittel und/oder Zusatzstoffe (e) hinzugefügt werden. Genannt seien beispielsweise Treibmittel, Antiblockmittel, oberflächenaktive Substanzen, Füllstoffe, beispielsweise Füllstoffe auf Basis von Nanopartikeln, insbesondere Füllstoffe auf Basis von CaCOa, weiterhin Keimbildungsmittel, Gleithilfemittel, Farbstoffe und Pigmente, Antioxidantien, z.B. gegen Hydrolyse, Licht, Hitze oder Verfärbung, anorganische und/oder organische Füllstoffe, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermolekulare Carbodiimide. Bevorzugt enthält das weiche Polyurethan Triazol und/oder Triazolderivat und Antioxidantien in einer Menge von 0,1 bis 5 Gew.-% bezogen auf das Gesamtgewicht des betreffenden weichen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für sterisch gehinderte Phenone finden sich in Plastics Additive Handbook, 5th edition, H. Zweifel, ed, Hanser Publishers, München, 2001 ([1]), S. 98-107 und S. 116 - S. 121. Beispiele für Aromatische Amine finden sich in [1] S. 107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung im Antioxidantiengemisch eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700g/mol und einer maximalen Molmasse (M_{w}) bis maximal 10.000 g/mol, bevorzugt bis maximal 3.000 g/mol auf. Ferner besitzen sie bevorzugt einen Schmelzpunkt von maximal 180°C. Weiterhin werden bevorzugt Antioxidantien verwendet, die amorph oder flüssig sind. Ebenfalls können als Komponente (e) auch Gemische von zwei oder mehr Antioxidantien verwendet werden.

Neben den genannten Komponenten (a), (b) und (c) und gegebenenfalls (d) und (e) können auch Kettenregler (Kettenabbruchsmittel), üblicherweise mit einem Molekulargewicht von 31 bis 3000 g/mol, eingesetzt werden. Solche Kettenregler sind Verbindungen, die lediglich eine gegenüber Isocyanaten reaktive funktionelle Gruppe aufweisen, wie z.B. monofunktionelle Alkohole, monofunktionelle Amine und/oder monofunktionelle Polyole. Durch solche Kettenregler kann ein Fließverhalten, insbesondere bei weichen Polyurethanen, gezielt eingestellt werden. Kettenregler können im allgemeinen in einer Menge von 0 bis 5, bevorzugt 0,1 bis 1 Gew.-Teile, bezogen auf 100 Gew.-Teile der Komponente (b) eingesetzt werden und fallen definitionsgemäß unter die Komponente (c).

Neben den genannten Komponenten (a), (b) und (c) und gegebenenfalls (d) und (e) können auch Vernetzungsmittel mit zwei oder mehr gegenüber Isocyanat reaktiven Gruppen gegen Schluss der Aufbaureaktion eingesetzt werden, beispielsweise Hydrazinhydrat.

Zur Einstellung der Härte von Polyurethan (A) können die Komponenten (b) und (c) in relativ breiten molaren Verhältnissen gewählt werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der weichen Polyurethane mit zunehmendem Gehalt an (c) ansteigt. Die Umsetzung zur Herstellung von Polyurethan (A) kann bei einer Kennzahl von 0,8 bis 1,4 : 1, bevorzugt bei einer Kennzahl von 0,9 bis 1,2 : 1, besonders bevorzugt bei einer Kennzahl von 1,05 bis 1,2 : 1 erfolgen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und gegebenenfalls (c) und gegebenenfalls monofunktionellen gegenüber Isocyanaten reaktiven Komponenten als Kettenabbruchsmitteln wie z.B. Monoalkoholen.

Die Herstellung von Polyurethan (A) kann nach an sich bekannten Verfahren kontinuierlich, beispielsweise nach One-shot oder dem Prepolymerverfahren, oder diskontinuierlich nach dem an sich bekannten Prepolymerprozess erfolgen. Bei diesen Verfahren können die zur Reaktion kommenden Komponenten (a), (b), (c) und gegebenenfalls (d) und/oder (e) nacheinander oder gleichzeitig miteinander vermischt werden, wobei die Reaktion unmittelbar einsetzt.

Polyurethan (A) kann man nach an sich bekannten Verfahren in Wasser dispergieren, beispielsweise indem man Polyurethan (A) in Aceton löst oder als Lösung in Aceton herstellt, mit Wasser versetzt und danach das Aceton entfernt, beispielsweise durch Abdestillieren. In einer Variante stellt man Polyurethan (A) als Lösung in N-Methylpyrrolidon oder N-Ethylpyrrolidon her, versetzt mit Wasser und entfernt das N-Methylpyrrolidon bzw. N-Ethylpyrrolidon.

In einer Ausführungsform der vorliegenden Erfindung enthalten erfindungsgemäße wässrige Dispersionen zwei verschiedene Polyurethane (A1) und (A2) auf, von denen Polyurethan (A1) ein sogenanntes weiches Polyurethan ist, das wie oben als Polyurethan (A) beschrieben aufgebaut ist, und mindestens ein hartes Polyurethan (A2).

Hartes Polyurethan (A2) kann man im Grundsatz analog zu weichem Polyurethan (A1) herstellen, jedoch wählt man andere gegenüber Isocyanaten reaktiven Verbindungen (b) oder andere Mischungen von gegenüber Isocyanaten reaktiven Verbindungen (b), im Rahmen der vorliegenden Erfindung auch als gegenüber Isocyanaten reaktiven Verbindungen (b2) oder kurz Verbindung (b2) bezeichnet.

Beispiele für Verbindungen (b2) sind insbesondere 1,4-Butandiol, 1,6-Hexandiol und Neopentylglykol, entweder in Mischung miteinander oder in Mischung mit Polyethylenglykol.

In einer Variante der vorliegenden Erfindung wählt man als Diisocyanat (a) und (a2) jeweils Mischungen von Diisocyanaten, beispielsweise Mischungen von HDI und IPDI, wobei man zur Herstellung von hartem Polyurethan (A2) größere Anteile an IPDI wählt als zur Herstellung von weichem Polyurethan (A1).

In einer Ausführungsform der vorliegenden Erfindung weist Polyurethan (A2) einen Shore-Härte A im Bereich von über 60 bis maximal 100 auf, wobei die Shore-Härte A nach DIN 53505 nach 3 s bestimmt wurde.

in einer Ausführungsform der vorliegenden Erfindung weist Polyurethan (A) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist weiches Polyurethan (A1) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist Polyurethan (A2) einen mittleren Partikeldurchmesser im Bereich im Bereich von 100 bis 300 nm, bevorzugt 120 bis 150 nm auf, bestimmt durch Laserlichtstreuung.

Erfindungsgemäße wässrige Dispersionen enthalten weiterhin
(B) eine Verbindung der allgemeinen Formel I a oder I b, im Rahmen der vorliegenden Erfindung auch kurz Verbindung (B) genannt, 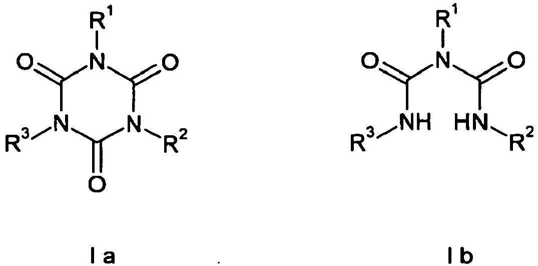
   wobei R¹, R² und R³ verschieden oder vorzugsweise gleich sein können und gewählt werden aus A¹-NCO und A¹-NH-CO-X, wobei
   A¹ ein Spacer mit 2 bis 20 C-Atomen ist, gewählt aus Arylen, unsubstituiert oder substituiert mit einer bis vier C₁-C₄-Alkylgruppen, Alkylen und Cycloalkylen, beispielsweise 1,4-Cyclohexylen. Bevorzugte Spacer A¹ sind Phenylen, insbesondere para-Phenylen, weiterhin Toluylen, insbesondere para-Toluylen, und C₂-C₁₂-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-.
   X gewählt wird O(AO)ₓR⁴, wobei
   AO ist C₂-C₄-Alkylenoxid, beispielsweise Butylenoxid, insbesondere Ethylenoxid (CH₂CH₂O) oder Propylenoxid (CH(CH₃)CH₂O) bzw. (CH₂CH(CH₃)O),
   x ist eine ganze Zahl im Bereich von 1 bis 50, bevorzugt 5 bis 25, und
   R⁴ ist gewählt aus Wasserstoff und C₁-C₃₀-Alkyl, insbesondere C₁-C₁₀-Alkyl wie Methyl, Ethyl, n-Propyl, iso-Propyl, n-Butyl, iso-Butyl, sec.-Butyl, tert.-Butyl, n-Pentyl, isoPentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl.

Besonders bevorzugte Verbindungen (B) sind solche, bei denen R¹ und R² und R³ jeweils gleich (CH₂)₄-NCO, (CH₂)₆-NCO oder (CH₂)₁₂-NCO sind.

Erfindungsgemäße wässrige Dispersionen enthalten weiterhin jeweils
(C) eine Silikonverbindung mit reaktiven Gruppen, wobei Silikonverbindung (C) gewählt wird aus Silikonverbindungen mit ein bis vier Aminogruppen pro Molekül, Silikonverbindungen mit ein bis vier Aminoalkylaminogruppen pro Molekül und Silikonverbindungen mit ein bis vier COOH-Gruppen pro Molekül,
   im Rahmen der vorliegenden Erfindung auch Silikonverbindung (C) genannt.

Beispiele für reaktive Gruppen im Zusammenhang mit Silikonverbindungen (C) sind beispielsweise Carbonsäuregruppen, Carbonsäurederivate wie beispielsweise Carbonsäuremethylester oder Carbonsäureanhydride, insbesondere Bernsteinsäureanhydridgruppen, und besonders bevorzugt Carbonsäuregruppen.

Beispiele für reaktive Gruppen sind weiterhin primäre und sekundäre Aminogruppen, beispielsweise NH(iso-C₃H₇)-Gruppen, NH(n-C₃H₇)-Gruppen, NH(cyclo-C₆H₁₁)-Gruppen und NH(n-C₄H₉)-Gruppen, insbesondere NH(C₂H₅)-Gruppen und NH(CH₃)-Gruppen, und ganz besonders bevorzugt NH₂-Gruppen.

Weiterhin sind Aminoalkylaminogruppen bevorzugt wie beispielsweise -NH-CH₂-CH₂-NH₂-Gruppen, -NH-CH₂-CH₂-CH₂-NH₂-Gruppen, -NH-CH₂-CH₂-NH(C₂H₅)-Gruppen, -NH-CH₂-CH₂-CH₂-NH(C₂H₅)-Gruppen, -NH-CH₂-CH₂-NH(CH₃)-Gruppen, -NH-CH₂-CH₂-CH₂-NH(CH₃)-Gruppen.

Die reaktive Gruppe bzw. die reaktiven Gruppen sind an Silikonverbindung (C) entweder direkt oder vorzugsweise über einen Spacer A² gebunden. A² wird gewählt aus Arylen, unsubstituiert oder substituiert mit einer bis vier C₁-C₄-Alkylgruppen, Alkylen und Cycloalkylen wie beispielsweise 1,4-Cyclohexylen. Bevorzugte Spacer A² sind Phenylen, insbesondere para-Phenylen, weiterhin Toluylen, insbesondere para-Toluylen, und C₂-C₁₈-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-, -(CH₂)₁₄-, -(CH₂)₁₆- und -(CH₂)₁₈-.

Zusätzlich zu den reaktiven Gruppen enthält Silikonverbindung (C) nicht-reaktive Gruppen, insbesondere Di-C₁-C₁₀-alkyl-SiO₂-Gruppen oder Phenyl-C₁-C₁₀-Alkyl-SiO₂-Gruppen, insbesondere Dimethyl-SiO₂-Gruppen, und gegebenenfalls eine oder mehrere Si(CH₃)₂-OH-Gruppen oder Si(CH₃)₃-Gruppen.

In einer Ausführungsform der vorliegenden Erfindung weist Silikonverbindung (C) im Mittel ein bis vier reaktive Gruppen pro Molekül auf.

In einer speziellen Ausführungsform der vorliegenden Erfindung weist Silikonverbindung (C) im Mittel ein bis vier COOH-Gruppen pro Molekül auf.

In einer anderen speziellen Ausführungsform der vorliegenden Erfindung weist Silikonverbindung (C) im Mittel ein bis vier Aminogruppen oder Aminoalkylaminogruppen pro Molekül auf.

Silikonverbindung (C) weist kettenförmig oder verzweigt angeordnete Si-O-Si-Einheiten auf.

In einer Ausführungsform der vorliegenden Erfindung weist Silikonverbindung (C) ein Molekulargewicht Mₙ im Bereich von 500 bis 10.000 g/mol auf, bevorzugt bis 5.000 g/mol.

Wenn Silikonverbindung (C) mehrere reaktive Gruppen pro Molekül aufweist, so können diese reaktiven Gruppen - direkt oder über Spacer A² - über mehrere Si-Atome oder paarweise über dasselbe-Si-Atom an der Si-O-Si-Kette gebunden sein.

Die reaktiven Gruppen bzw. die reaktive Gruppe kann an einem oder mehreren der terminalen Si-Atome von Silikonverbindung (C) - direkt oder über Spacer A² - gebunden sein. In einer anderen Ausführungsform der vorliegenden Erfindung ist die reaktive Gruppe bzw. sind die reaktiven Gruppen an einem oder mehreren der nicht terminalen Si-Atome von Silikonverbindung (C) - direkt oder über Spacer A² - gebunden.

In einer Ausführungsform der vorliegenden Erfindung enthält erfindungsgemäße wässrige Dispersion
(D) ein Polydi-C₁-C₄-Alkyisiloxan, das weder Aminogruppen noch COOH-Gruppen aufweist, vorzugsweise ein Polydimethylsiloxan, im Rahmen der vorliegenden Erfindung auch kurz Polydialkylsiloxan (D) bzw. Polydimethylsiloxan (D) genannt.

Dabei kann C₁-C₄-Alkyl in Polydialkylsiloxan (D) verschieden oder vorzugsweise gleich sein und gewählt aus Methyl, Ethyl, n-Propyl, iso-Propyl, n-Butyl, iso-Butyl, sec.-Butyl und tert.-Butyl, wobei unverzweigtes C₁-C₄-Alkyl bevorzugt ist, besonders bevorzugt ist Methyl.

Bei Polydialkylsiloxan (D) und vorzugsweise bei Polydimethylsiloxan (D) handelt es sich vorzugsweise um unverzweigte Polysiloxane mit Si-O-Si-Ketten oder um solche Polysiloxane, die bis zu 3, bevorzugt maximal eine Verzweigung pro Molekül aufweisen.

Polydialkylsiloxan (D) und insbesondere Polydimethylsiloxan (D) kann eine oder mehrere Si(C₁-C₄-Alkyl)₂-OH-Gruppen aufweisen.

In einer Ausführungsform der vorliegenden Erfindung enthält erfindungsgemäße wässrige Dispersion insgesamt im Bereich von 20 bis 30 Gew.-% Polyurethan (A), bzw. insgesamt im Bereich von 20 bis 30 Gew.-% Polyurethane (A1) und (A2),
im Bereich von 1 bis 10, bevorzugt 2 bis 5 Gew.-% Verbindung (B),
im Bereich von 1 bis 10 Gew.-% Silikonverbindung (C),
im Bereich von null bis 5, bevorzugt 2 bis 4 Gew.-% Vernetzer (D),
im Bereich von null bis 10, bevorzugt 0,5 bis 5 Gew.-% Polydialkylsiloxan (D).

Dabei bezeichnen Angaben in Gew.-% jeweils den Wirkstoff bzw. Feststoff und sind auf die gesamte erfindungsgemäße wässrige Dispersion bezogen. Der zu 100 Gew.-% fehlende Rest ist vorzugsweise kontinuierliche Phase, beispielsweise Wasser oder ein Gemisch von einem oder mehreren organischen Lösemitteln und Wasser, wobei in vorstehend genannten Gemischen mindestens 50 Gew.-% Wasser sind. Geeignete organische Lösemittel sind beispielsweise Alkohole wie Ethanol oder Isopropanol und insbesondere Glykole, Diglykole, Triglykole oder Tetraglykole und zweifach oder vorzugsweise einfach mit C₁-C₄-Alkyl veretherte Glykole, Diglykole, Triglykole oder Tetraglykole. Beispiele für geeignete organische Lösemittel sind Ethylenglykol, Propylenglykol, Butylenglykol, Diethylenglykol, Triethylenglykol, Tetraethylenglykol, Dipropylenglykol, 1,2-Dimethoxyethan, Methyltriethylenglykol ("Methyltriglykol") und Triethylenglykoln-butylether ("Butyltriglykol").

In einer Ausführungsform der vorliegenden Erfindung enthält erfindungsgemäße wässrige Dispersion
im Bereich von 10 bis 30 Gew.-% weiches Polyurethan (A1) und
im Bereich von null bis 20 Gew.-% hartes Polyurethan (A2).

In einer Ausführungsform der vorliegenden Erfindung weist erfindungsgemäße wässrige Dispersion einen Feststoffgehalt von insgesamt 5 bis 60 Gew.-% auf, bevorzugt 10 bis 50 Gew.-% und besonders bevorzugt 25 bis 45 Gew.-%.

In einer Ausführungsform der vorliegenden Erfindung enthält erfindungsgemäße wässrige Dispersion mindestens einen Zusatz (E), gewählt aus Pigmenten, Mattierungsmitteln, Lichtschutzmitteln, Antistatika, Antisoil, Antiknarz, Verdickungsmitteln, insbesondere Verdickungsmitteln auf Basis von Polyurethanen, und Mikrohohlkugeln.

In einer Ausführungsform der vorliegenden Erfindung enthält erfindungsgemäße wässrige Dispersion insgesamt bis zu 20 Gew.-% an Zusätzen (E).

Weiterhin wurde ein Verfahren zur Herstellung von erfindungsgemäßen wässrigen Dispersionen gefunden, im Rahmen der vorliegenden Erfindung auch erfindungsgemäßes Herstellverfahren genannt. Zur Durchführung des erfindungsgemäßen Herstellverfahrens vermischt man Polyurethan (A), Verbindung (B) und Silikonverbindung (C) mit Wasser und gegebenenfalls einem oder mehreren der vorstehend genannten organischen Lösemittel. Weiterhin vermischt man, falls gewünscht, mit Polydialkylsiloxan (D) und Zusätzen (E). Das Vermischen kann man beispielsweise durch Verrühren durchführen. Dabei ist die Reihenfolge der Zugabe von Polyurethan (A), Verbindung (B), Silikonverbindung (C) und Wasser und gegebenenfalls einem oder mehreren der vorstehend genannten organischen Lösemittel sowie - falls gewünscht - Polydialkylsiloxan (D) und Zusätzen (E) beliebig.

Bevorzugt geht man von einem in Wasser oder einem Gemisch aus Wasser und organischem Lösemittel dispergierten Polyurethan (A) oder von dispergiertem weichem Polyurethan (A1) und hartem Polyurethan (A2) aus und gibt, vorzugsweise unter Rühren, Verbindung (B) und Silikonverbindung (C) sowie, falls gewünscht, Polydialkylsiloxan (D) und gegebenenfalls ein oder mehrere organische Lösemittel zu.

In einer speziellen Ausführungsform des erfindungsgemäßen Herstellverfahrens gibt man Verdickungsmittel als Beispiel für einen Zusatz (E) als letztes zu und stellt so die gewünschte Viskosität ein.

Ein weiterer Gegenstand der vorliegenden Erfindung ist die Verwendung von erfindungsgemäßen wässrigen Dispersionen zur Herstellung von mehrschichtigen flächigen Substraten. Ein weiterer Gegenstand der vorliegenden Erfindung ist ein Verfahren zur Herstellung von mehrschichtigen flächigen Substraten unter Verwendung von erfindungsgemäßen wässrigen Dispersionen, im Rahmen der vorliegenden Erfindung auch erfindungsgemäßes Beschichtungsverfahren genannt. Ein weiterer Gegenstand der vorliegenden Erfindung sind mehrschichtige flächige Substrate, hergestellt unter Verwendung von erfindungsgemäßen wässrigen Dispersionen.

Zur Herstellung von erfindungsgemäßen mehrschichtigen flächigen Substraten geht man von flächigen Substraten aus. Bei flächigen Substraten kann es sich beispielsweise um Kunststofffolien, z. B. aus Polyethylen, Polypropylen, Polyester, Polycarbonat, Polystyrol oder Polyvinylchlorid, handeln. Bevorzugt wählt man flächige Substrate aus Textil, beispielsweise Matten, Gewirken, Gelegen, Geflechten, Strickwaren, Geweben und insbesondere Vliesstoffen (Non-Wovens), synthetischen Veloursmaterialien mit einer aus Mikrofasern bestehenden Oberseite. Weitere geeignete flächige Substrate sind Formkörper aus Kunststoff, beispielsweise Armaturenbretter, weiterhin Kunstleder und ganz besonders bevorzugt Leder, wobei unter Leder auch Spaltleder und Leder mit Rohhautfehlern einbezogen ist. Leder kann nach beliebigem Verfahren gegerbt sein, beispielsweise mit Chrom-(III)-Verbindungen oder chromfrei, und kann auf beliebige Tierhaut zurückzuführen sein, insbesondere auf Rind. Dabei ist es unerheblich, ob das Tier, aus dessen Haut man im erfindungsgemäßen Verfahren eingesetzten Leder gemacht hat, geschlachtet wurde oder aufgrund von Unfällen oder natürlichen Ursachen wie beispielsweise Krankheiten gestorben ist.

Wünscht man Leder als flächiges Substrat einzusetzen, so kann man die Fleischseite oder die Narbenseite mit erfindungsgemäßer Dispersion beschichten.

In einer Ausführungsform der vorliegenden Erfindung beschichtet man flächiges Substrat mit erfindungsgemäßer Dispersion und härtet danach aus, beispielsweise durch thermische Behandlung.

In einer bevorzugten Ausführungsform der vorliegenden Erfindung beschichtet man flächiges Substrat nach einem Umkehrverfahren, wie es beispielsweise in WO 05/47549 beschrieben ist.

In einer besonders bevorzugten Ausführungsform der vorliegenden Erfindung geht man wie folgt vor. Man stellt in einem ersten Schritt aus einem Material, bevorzugt aus Metall, Kunststoff oder besonders einem Silikon, insbesondere einem Silikonkautschuk, einen flächigen Körper dar. In einem zweiten Schritt gibt man dem flächigen Körper eine Strukturierung, beispielsweise durch Prägen und bevorzugt durch Behandlung mit Hilfe eines Lasers. Die Strukturierung entspricht vorzugsweise der Narbenstruktur eines Leders, beispielsweise eines Rind-, Kalbs- oder Krokodilleders oder der Oberflächenstruktur eines Nubukleders. In einer Variante der vorliegenden Erfindung kann die Strukturierung eine Fantasiestruktur aufweisen, oder man kann Logos aufprägen.

In einer speziellen Ausführungsform weist die Strukturierung neben der Narbenstruktur eines Leders, beispielsweise eines Rind-, Kalbs- oder Krokodilleders zusätzlich feine Vertiefungen mit einer maximalen Tiefe von 200 µm, bevorzugt von 60 bis 100 µm und einem mittleren Durchmesser im Bereich von 10 bis 30 µm auf. Das Muster der Vertiefungen kann dann einem Rinds-, Kalbs- oder Krokodilleder entsprechen.

In einer Ausführungsform der vorliegenden Erfindung weist der flächige Körper eine Dicke im Bereich von 0,5 bis 5 mm, bevorzugt 1 bis 3 mm auf.

Im dritten Schritt des erfindungsgemäßen Beschichtungsverfahrens geht man vorzugsweise so vor, dass man erfindungsgemäße wässrige Dispersion auf den strukturierten Körper aufträgt, beispielsweise durch Sprühen, Spritzen, Gießen, Rakeln, Coaten oder Rollcoaten.

Man kann beispielsweise 10 bis 100 g/m², bevorzugt 50 bis 75 g/m² erfindungsgemäße wässrige Dispersion auf den flächigen Körper auftragen.

In einer Ausführungsform der vorliegenden Erfindung hat der flächige Körper Zimmertemperatur. Vorzugsweise hat er jedoch eine Temperatur, die höher ist als Zimmertemperatur, insbesondere im Bereich von 35 bis 90°C. Dadurch wird eine stärkere Verfestigung der Beschichtung durch erfindungsgemäße wässrige Dispersion bewirkt.

In einem vierten Schritt überträgt man dann die verfestigte Beschichtung auf ein flächiges Substrat. Das Übertragen kann manuell oder vorzugsweise maschinell geschehen, insbesondere so, dass man den flächigen Körper mit einer Rolle oder Walze in Verbindung gebracht hat und nun mit Hilfe des auf eine Rolle oder Walze aufgebrachten flächigen Körpers die Beschichtung auf das betreffende flächige Substrat überträgt. Man erhält ein erfindungsgemäßes mehrschichtiges Substrat. Die aus erfindungsgemäßer wässriger Dispersion hergestellte verfestigte Beschichtung dient im erfindungsgemäßen mehrschichtigen Substrat Deckschicht und kann im Rahmen der vorliegenden Erfindung auch als Deckschicht bezeichnet werden.

In einem weiteren Schritt kann man die Adhäsion von übertragener Schicht und flächigem Substrat dadurch verbessern, dass man das frisch hergestellte erfindungsgemäße mehrschichtige Substrat noch thermisch behandelt oder zusammenpresst oder eine Kombination der vorstehend genannten Schritte durchführt.

Man beobachtet, dass bei der Durchführung des erfindungsgemäßen Beschichtungsverfahrens der flächige Körper nur äußerst langsam an Qualität einbüßt, beispielsweise durch Verschmutzung.

Erfindungsgemäße mehrschichtige Substrate weisen insgesamt vorzügliche Eigenschaften auf, beispielsweise gute Atmungsaktivität, sehr gute Gebrauchsechtheiten wie beispielsweise Reibechtheiten und einen sehr guten Griff.

In einer bevorzugten Ausführungsform der vorliegenden Erfindung überträgt man die unter Verwendung von erfindungsgemäßer wässriger Dispersion hergestellte Beschichtung nicht unmittelbar auf das flächige Substrat, sondern bringt zunächst noch eine Verbindungsschicht auf die verfestigte Beschichtung, so lange sie sich noch auf dem flächigen Körper befindet, beispielsweise der Rolle oder der Walze, und überträgt unter Verwendung von erfindungsgemäßer wässriger Dispersion hergestellte Beschichtung und Verbindungsschicht gemeinsam auf das flächige Substrat.

In einer besonders bevorzugten Ausführungsform der vorliegenden Erfindung überträgt man die unter Verwendung von erfindungsgemäßer wässriger Dispersion hergestellte Beschichtung nicht unmittelbar auf das flächige Substrat, sondern bringt zunächst eine Verbindungsschicht auf die verfestigte Beschichtung, so lange sie sich noch auf dem Körper befindet, und eine zweite Verbindungsschicht auf das flächige Substrat, wobei die beiden Verbindungsschichten im wesentlichen die gleiche Zusammensetzung aufweisen, und überträgt unter Verwendung von erfindungsgemäßer wässriger Dispersion hergestellte Beschichtung und Verbindungsschicht gemeinsam auf das bereits mit Verbindungsschicht versehene flächige Substrat.

Bei der Verbindungsschicht bzw. den Verbindungsschichten mit im Wesentlichen gleicher Zusammensetzung handelt es sich beispielsweise um Schichten, die man durch Auftragen von vorzugsweise einer oder mehreren wässrigen Formulierungen erhält, wobei die betreffenden wässrigen Formulierungen wie folgt zusammengesetzt sind:
(α) mindestens ein Polyurethan, das gleich oder verschieden von Polyurethan (A) sein kann,
(β) mindestens eine Verbindung der allgemeinen Formel I a oder I b, die wie vorstehend definiert ist, kurz auch Verbindung (β) genannt; vorzugsweise sind Verbindung (B) und Verbindung (β) gleich,
(γ) vorzugsweise mindestens ein Bindemittel, beispielsweise ein (Meth)acrylatbindemittel oder ein Polyurethanbindemittel, vorzugsweise ein Copolymerisat von (Meth)acrylsäure, im Rahmen der vorliegenden Erfindung auch als Bindemittel (γ) bezeichnet. Vorzugsweise handelt es sich bei Bindemittel (γ) um ein Copoylymer von (Meth)acrylsäure und mindestens einem C₁-C₁₀-Alkylester von (Meth)acrylsäure,
(δ) gegebenenfalls mindestens einen Zusatzstoff, beispielsweise gewählt aus Pigmenten, Griffmitteln, Verdickungsmitteln (Verdickern), Antistatika und Mattierungsmitteln.

Der Rest ist vorzugsweise Wasser.

Vorzugsweise enthält die wässrige Formulierung bzw. die wässrigen Formulierungen, aus der bzw. denen man die Deckschicht(en) herzustellen wünscht, eine Silikonverbindung wie beispielsweise Silikonverbindung (C) oder wie Polydialkylsiloxan (D).

In einer Ausführungsform der vorliegenden Erfindung enthält die wässrige Formulierung bzw. die wässrigen Formulierungen, aus der bzw. denen man die Deckschicht(en) herzustellen wünscht, mindestens ein weiches Polyurethan (α1) und mindestens ein hartes Polyurethan (α2), die jeweils verschieden oder vorzugsweise gleich weichem Polyurethan (A1) bzw. hartem Polyurethan (A2) sein können.

Die wässrige Formulierung bzw. die wässrigen Formulierungen, aus der bzw. denen man die Deckschicht(en) herzustellen wünscht, können ein oder mehrere organische Lösemittel enthalten. Beispiele für organische Lösemittel sind Alkohole wie Ethanol oder Isopropanol und insbesondere Glykole, Diglykole, Triglykole oder Tetraglykole und zweifach oder vorzugsweise einfach mit C₁-C₄-Alkyl veretherte Glykole, Diglykole, Triglykole oder Tetraglykole. Beispiele für geeignete organische Lösemittel sind Ethylenglykol, Propylenglykol, Butylenglykol, Diethylenglykol, Triethylenglykol, Tetraethylenglykol, Dipropylenglykol, 1,2-Dimethoxyethan, Methyltriethylenglykol ("Methyltriglykol") und Triethylenglykol-n-butylether ("Butyltriglykol")..

In einer Ausführungsform der vorliegenden Erfindung ist die wässrige Formulierung bzw. die wässrigen Formulierungen, aus der bzw. denen man die Deckschicht(en) herzustellen wünscht, wie folgt zusammengesetzt:
insgesamt im Bereich von 20 bis 30 Gew.-% Polyurethan (α),
im Bereich von 1 bis 5, bevorzugt 2 bis 3 Gew.-% Verbindung (β),
im Bereich von bis 20 Gew.-% Bindemittel (γ),
im Bereich von null bis insgesamt 20 Gew.-% Zusatzstoff(e) (δ),
und vorzugsweise weder Silikonverbindung (C) noch Polydialkylsiloxan (D).

In einer Ausführungsform der vorliegenden Erfindung enthält die wässrige Formulierung bzw. die wässrigen Formulierungen, aus der bzw. denen man die Deckschicht(en) herzustellen wünscht,
im Bereich von 10 bis 30 Gew.-% weiches Polyurethan (α1) und
im Bereich von null bis 20 Gew.-% hartes Polyurethan (α2).

Dabei bezeichnen Angaben in Gew.-% jeweils den Wirkstoff bzw. Feststoff und sind auf die gesamte im erfindungsgemäßen Beschichtungsverfahren eingesetzte wässrige Formulierung bezogen. Der zu 100 Gew.-% fehlende Rest ist vorzugsweise kontinuierliche Phase, beispielsweise Wasser oder ein Gemisch von einem oder mehreren organischen Lösemitteln und Wasser, wobei in vorstehend genannten Gemischen mindestens 50 Gew.-% Wasser sind.

Die Dicke der Deckschichten kann im Bereicht von 5 bis 50 µm betragen, bevorzugt 10 bis 30 µm.

Das Auftragen kann beispielsweise erfolgen durch Sprühen, Spritzen, Gießen, Rakeln, Coaten oder Rollcoaten erfolgen.

Das Verbinden der Schichten kann durch an sich übliche Methoden verbessert bzw. beschleunigt werden, beispielsweise durch thermische Behandlung bei 80 bis 120°C und/oder Aneinanderpressen bei einem Anpressdruck im Bereich von 1,5 bis 3 bar.

Erfindungsgemäße mehrschichtige Substrate eignen sich zur Herstellung von beispielsweise Möbeln und insbesondere Automobilinnenteilen, insbesondere Autositzen, weiterhin von Schuhen, Textilien und Möbeln. Sie weisen eine gute Echtheit und außerdem eine vorzügliche Atmungsaktivität auf. Ein Gegenstand der vorliegenden Anmeldung sind also weiterhin Automobilinnenteile, Schuhe, Textilien und Möbel, hergestellt unter Verwendung von erfindungsgemäßen mehrschichtigen Substraten.

Die Erfindung wird durch Arbeitsbeispiele erläutert.

Allgemeine Bemerkung: Angaben in Gew.-% sind teil qu'elle.

### I. Herstellung von erfindungsgemäßen wässrigen Dispersionen

### 1.1 Herstellung einer erfindungsgemäßen wässrigen Dispersion Disp.1

In einem Rührgefäß vermischte man unter Rühren:
7 Gew.-% einer wässrigen Dispersion (Partikeldurchmesser: 125 nm, Feststoffgehalt: 40%) eines weichen Polyurethans (A1.1), hergestellt aus Hexamethylendiisocyanat (a1.1) und Isophorondiisocyanat (a1.2) im Gew.-Verhältnis 13:10 als Diisocyanate und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), sowie 3 Gew.-% einfach methyliertem Polyethylenglykol (c.1) sowie 3 Gew.-% H₂N-CH₂CH₂-NH-CH₂CH₂-COOH, Gew.-% jeweils bezogen auf Polyesterdiol (b1.1),
Erweichungspunkt von weichem Polyurethan (A1.1): 62°C, Erweichung beginnt bei 55°C, Shore-Härte A 54,
65 Gew.-% einer wässrigen Dispersion (Partikeldurchmesser: 150 nm) eines harten Polyurethans (A2.1), erhältlich durch Umsetzung von Isophorondiisocyanat (a1.2), 1,4-Butandiol (b1.2) und H₂N-CH₂CH₂-NH-CH₂CH₂-COOH, Erweichungspunkt von 195°C, Shore-Härte A 86,
3,5 Gew.-% einer 70 Gew.-% Lösung (in Propylencarbonat) von Verbindung (B.1) 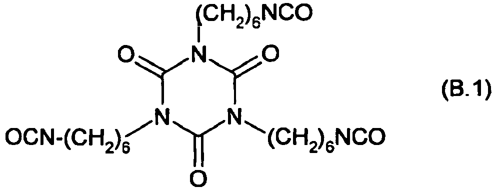 NCO-Gehalt 12%,
6 Gew.-% einer 65 Gew.-% wässrigen Dispersion der Silikonverbindung nach Beispiel 2 aus EP-A 0 738 747 (C.1)
2 Gew.-% Ruß,
0,5 Gew.-% eines Verdickungsmittels auf Polyurethanbasis.

Man erhielt erfindungsgemäße wässrige Dispersion Disp.1 mit einem Feststoffgehalt von 35% und einer kinematischen Viskosität von 25 Sek. bei 23°C, bestimmt nach DIN EN ISO 2431, Stand Mai 1996.

### I.2 Herstellung einer erfindungsgemäßen wässrigen Dispersion Disp.2

In einem Rührgefäß vermischte man unter Rühren:
7 Gew.-% einer wässrigen Dispersion (Partikeldurchmesser: 125 nm, Feststoffgehalt: 40%) eines weichen Polyurethans (A1.1), hergestellt aus Hexamethylendiisocyanat (a1.1) und Isophorondiisocyanat (a1.2) im Gew.-Verhältnis 13:10 als Diisocyanate und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), sowie 3 Gew.-% einfach methyliertem Polyethylenglykol (c.1) sowie 3 Gew.-% H₂N-CH₂CH₂-NH-CH₂CH₂-COOH, Gew.-% jeweils bezogen auf Polyesterdiol (b1.1),
Erweichungspunkt von weichem Polyurethan (A1.1): 62°C, Erweichung beginnt bei 55°C, Shore-Härte A 54,
65 Gew.-% einer wässrigen Dispersion (Partikeldurchmesser: 150 nm) eines harten Polyurethans (A2.2), erhältlich durch Umsetzung von Isophorondiisocyanat (a1.2), 1,4-Butandiol (b1.2), 1,1-Dimethylolpropionsäure, Hydrazinhydrat und Polypropylenglykol mit einem Molekulargewicht M_{w} von 4200 g/mol (b1.3), Polyurethan (A2.2) hatte einen Erweichungspunkt von 195°C, Shore-Härte A 86,
3,5 Gew.-% einer 70 Gew.-% Lösung (in Propylencarbonat) von Verbindung (B.1),
6 Gew.-% einer 65 Gew.-% wässrigen Dispersion der Silikonverbindung nach Beispiel 2 aus EP-A 0 738 747 (C.1)
2 Gew.-% Ruß,
0,5 Gew.-% eines Verdickungsmittels auf Polyurethanbasis.

Man erhielt erfindungsgemäße wässrige Dispersion Disp.2 mit einem Feststoffgehalt von 35% und einer kinematischen Viskosität von 25 Sek. bei 23°C, bestimmt nach DIN EN ISO 2431, Stand Mai 1996.

### II. Herstellung eines flächigen Körpers

Es wurde eine lasergravierbare Silikonpolymerschicht mit einer glatten Oberfläche auf Basis eines raumtemperaturhärtenden füllstoffhaltigen 2-Komponenten-Silikonelastomers hergestellt, indem die beiden Komponenten intensiv miteinander vermischt und mit Hilfe einer Rakelbeschichtung auf eine temporäre PET-Deckfolie aufgebracht wurden. Man ließ die Silikonschicht 16 Stunden bei Raumtemperatur aushärten. Die so chemisch verstärkte elastomere Silikonschicht fixierte man mit Hilfe eines Silikonklebers auf einem Polyestergewebe als Trägerelement. Die nach Entfernung der temporären PET-Deckfolie erhaltene verstärkte elastomere Polymerschicht mit Gewebeträger wies eine Gesamtschichtdicke von 1,7 mm auf. Der erhaltende flächige Körper (nicht strukturiert) wurde vor der anschließenden Strukturierung mittels Laser in Plattenstücke von ca. 40 x 100 cm konfektioniert.

Zur Strukturierung des flächigen Körpers wurde eine CO₂-Lasergravurmaschine vom Typ BDE 4131 (Fa. Stork Prints Austria GmbH, Kufstein) verwendet. Die Maschine verfügt über 3 sealed CO₂-Lase mit einer Nennleistung von je 250 W, den entsprechenden optischen Komponenten sowie der zugehörigen Peripherie zur Steuerung, Laserkühlung, Ablufterfassung und Abluftbehandlung. Das zylindrische Aufnahmesystem bestand entweder aus einer dünnwandigen zylindrischen Metalltrommel oder aus Metallkonen, in die ein sog. Drucksleeve, bestehend aus einem (meist mehrschichtig aufgebauten) zylindrischen Hohlzylinder aus einem oder mehreren Kunststoffen, eingespannt wird. Die Lasersteuerung erfolgte über einen verbundenen Steuerrechner mittels einer speziellen Ausgabesoftware. Die Ausgabesoftware interpretiert das als Graustufen-Bitmap vorliegende Motiv als pixelweises Höhenprofil. Jede Graustufe entspricht einer bestimmten Gravurtiefe bzw. Gravurleistung am betreffenden Punkt des Motivs. Idealerweise ist der Zusammenhang zwischen Graustufenwert und Gravurtiefe ungefähr linear eingestellt.

Der flächige Körper (nicht strukturiert) lag als plane Schicht vor und wurde auf einem zylindrischen Aufnahmeelement für die Dauer der Gravur fixiert. Während des Gravur-prozesses wurde das rotierende zylindrische Aufnahmeelement mit der zu bearbeitenden Matrize gleichförmig relativ zum Laserstrahl in axialer Richtung verschoben. Auf diese Weise überstrich der Laserstrahl die gesamte zu bearbeitende Fläche des flächigen Körpers.

Der flächige Körper (nicht strukturiert) gemäß Beispiel II. wurde mit einem Motiv graviert, das aus einer Kombination aus den folgenden beiden Einzelmotiven gemäß Tabelle 1 bestand.

**Tabelle 1: Einzelmotiven des Motivs auf dem flächigen Körper (strukturiert)**

| Einzelmotiv Nr. | Funktion | Motivtyp |
|---|---|---|
| 1 | Näpfchen | Näpfchen mit |
| | | Durchmesser = 72 µm |
| | | Mittenabstand = 100 µm |
| | | (in Form eines invertierten autotypischen Rasters von 100 I/cm = 254 Ipi bei einem Tonwert von 40 %) |
| 2 | Mikrorauhigkeit | Rauhigkeitsmuster mit |
| | | Rauhigkeitsamplitude = 30 µm |
| | | Rauhigkeitsfrequenz = 30 µm |

| | | |
|---|---|---|
| Ipi = lines per inch | | |

Auf diese Weise wurde ein flächiger Körper (strukturiert) mit rauer Oberfläche und ca. 10000 Näpfchen / cm² erhalten. Die Tiefe der gravierten Näpfchen betrug ca. 80 µm. Der flächige Körper (strukturiert) wurde mit Hilfe einer Wasser-Tensid-Mischung nachgereinigt und direkt für erfindungsgemäße Beschichtungsverfahren eingesetzt.

### III. Herstellung von wässrigen Formulierungen für die Deckschicht

### III.1 Herstellung einer erfindungsgemäßen wässrigen Formulierung WF.1

In einem Rührgefäß vermischte man unter Rühren:
7 Gew.-% einer wässrigen Dispersion (Partikeldurchmesser: 125 nm), Feststoffgehalt: 40%) eines weichen Polyurethans (α1.1), hergestellt aus Hexamethylendiisocyanat (a1.1) und Isophorondiisocyanat (a1.2) im Gew.-Verhältnis 13:10 als Diisocyanate und und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), 3 Gew.-% einfach methyliertem Polyethylenglykol (c.1) sowie 3 Gew.-% H₂N-CH₂CH₂-NH-CH₂CH₂-COOH, Gew.-% jeweils bezogen auf Polyesterdiol (b1.1),
Erweichungspunkt von 62°C, Erweichung beginnt bei 55°C, Shore-Härte A 54,
65 Gew.-% einer wässrigen Dispersion (Partikeldurchmesser: 150 nm) eines harten Polyurethans (α2.1) durch Umsetzung von Isophorondiisocyanat (a1.2), 1,4-Butandiol (b1.2) und H₂N-CH₂CH₂-NH-CH₂CH₂-COOH, Erweichungspunkt von 170°C, Shore-Härte A 90,
3,5 Gew.-% einer 70 Gew.-% Lösung (in Propylencarbonat) von Verbindung (β.1), NCO-Gehalt 12%,
2 Gew.-% Ruß.

Man erhielt wässrige Formulierung WF.1. Anmerkung: Verbindung (B.1) war identisch mit Verbindung (β.1).

### 111.2 Herstellung einer erfindungsgemäßen wässrigen Formulierung WF.2

In einem Rührgefäß vermischte man unter Rühren:
7 Gew.-% einer wässrigen Dispersion (Partikeldurchmesser: 125 nm), Feststoffgehalt: 40%) eines weichen Polyurethans (α1.1), hergestellt aus Hexamethylendiisocyanat (a1.1) und Isophorondiisocyanat (a1.2) im Gew.-Verhältnis 13:10 als Diisocyanate und und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), 3 Gew.-% einfach methyliertem Polyethylenglykol (c.1) sowie 3 Gew.-% H₂N-CH₂CH₂-NH-CH₂CH₂-COOH, Gew.-% jeweils bezogen auf Polyesterdiol (b1.1),
Erweichungspunkt von 62°C, Erweichung beginnt bei 55°C, Shore-Härte A 54,
65 Gew.-% einer wässrigen Dispersion (Partikeldurchmesser: 150 nm) eines harten Polyurethans (α2.2), erhältlich durch Umsetzung von Isophorondiisocyanat (a1.2), 1,4-Butandiol (b1.2), 1,1-Dimethylolpropionsäure, Hydrazinhydrat und Polypropylenglykol mit einem Molekulargewicht M_{w} von 4200 g/mol (b1.3), Polyurethan (α2.2) hatte einen Erweichungspunkt von 195°C, Shore-Härte A 90,
3,5 Gew.-% einer 70 Gew.-% Lösung (in Propylencarbonat) von Verbindung (β.1), NCO-Gehalt 12%, und
2 Gew.-% Ruß.

Man erhielt erfindungsgemäße wässrige Dispersion WF.2 mit einem Feststoffgehalt von 35% und einer kinematischen Viskosität von 25 Sek., bestimmt nach bei 23°C nach DIN EN ISO 2431, Stand Mai 1996.

### IV. Auftragung von erfindungsgemäßen Dispersionen auf flächigen Körper aus II.

Der flächige Körper wurde auf eine beheizbare Unterlage gelegt und auf 80°C erwärmt. Anschließend wurde durch mehrere Sprühdüsen Disp.1 oder Disp.2 aufgesprüht, und zwar jeweils 60 g/m² (nass). Man ließ bei 80°C verfestigen, bis die Oberfläche nicht mehr klebrig war. Man erhielt einen mit einer Deckschicht beschichteten flächigen Körper.

### V. Auftragung von Verbindungsschicht auf Leder und auf mit einer Deckschicht beschichtete flächige Körper aus IV. und Übertragung der Beschichtungen vom beschichteten flächigen Körper auf Leder

Auf die mit einer Deckschicht beschichteten flächigen Körper aus IV. brachte man durch zwei Sprühdüsen analog zu IV. WF.1 bzw. WF.2 auf, und zwar 70 g/m² (nass). Man ließ in einem Lufttrockner bei 80°C trocknen, bis die Oberfläche nicht mehr klebrig war. Man erhielt einen mit einer Deckschicht und einer Verbindungsschicht beschichteten flächigen Körper.

Auf ein konventionell mit Chrom (III) gegerbtes Rindernappaleder wurde WF.1 bzw. WF.2 mit Hilfe einer Spritzpistole aufgetragen, und zwar 50 g/m² (nass). Man lagerte zwei Minuten bei Zimmertemperatur, danach fühlte sich das beschichtete Rindernappaleder trocken an.

Anschließend legte man das beschichtete Rindernappaleder mit der Beschichtung nach unten auf den mit einer Deckschicht und einer Verbindungsschicht beschichteten flächigen Körper und presste in einer beheizten Presse (90°C) mit Hilfe von druckelastischen Abstützen bei einem Druck von 2 bar über einen Zeitraum von 15 Sekunden. Man erhielt ein erfindungsgemäßes beschichtetes Rindernappaleder L.1.

Der flächige Körper (unbeschichtet) ließ sich leicht und rückstandsfrei von erfindungsgemäßem beschichtetem Rindemappaleder L.1 bzw. L.2 entfernen und sofort wieder verwenden.

Erfindungsgemäße Rindernappaleder L.1 bzw. L.2 hatten folgende Eigenschaften: Haftfestigkeit in Anlehnung an DIN EN ISO 11644 mit einem Cyanacrylatkleber: Wert trocken: 21,3 N/cm, Wert nass: 10,3 N/cm bzw. 10,5 N/cm Reibechtheiten in Anlehnung an DIN EN ISO 11640:
Benzinreibechtheit, gestestet mit Waschbenzin: Note 5 für 20x
Neutralseife-Reibechtheit: Note 5 für 100x
Lösemittelreibechtheit, getestet mit Ethanol: Note 5
Nassreibechtheit, Note 4 bis 5 für 500x
Schweißreibechtheit: Note 5 für 100x
Trockenreibechtheit: Note 5 für 2.000x

### VI. Beschichtung eines Vliesstoffs

Man ging aus von einem Vliesstoff (Polyester) und einem flächigen Körper (strukturiert) gemäß II.

### VI.1 Herstellung von erfindungsgemäßen wässrigen Dispersionen Disp.3 und Disp.4

Man vermischte in einem Rührgefäß unter Rühren:
10 Gew.-% einer wässrigen Dispersion (Partikeldurchmesser: 125 nm) eines thermoplastischen Polyurethans (A1.1), hergestellt aus Hexamethyldiisocyanat (a1.1) und Isophorondiisocyanat (a1.2) im Gew.-Verhältnis 13:10 als Diisocyanate und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2,5 Gew.-% 1,4-Butandiol (b1.2), 3 Gew.-% einfach methyliertem Polyethylenglykol (c.1) sowie 3 Gew.-% H₂N-CH₂CH₂-NH-CH₂CH₂-COOH, Gew.-% jeweils bezogen auf Polyesterdiol (b1.1), Erweichungspunkt von 62°C, Erweichung beginnt bei 55°C, Shore-Härte A 54,
60 Gew.-% einer wässrigen Dispersion (Partikeldurchmesser: 150 nm) eines harten Polyurethans (A1.2) durch Umsetzung von Isophorondiisocyanat, 1,4-Butandiol und H₂N-CH₂CH₂-NH-CH₂CH₂-COOH, Shore-Härte A 86,
3,5 Gew.-% einer 70 Gew.-% (in Propylencarbonat) Lösung von Verbindung (B.1) (s.o.), NCO-Gehalt 12%,
6 Gew.-% einer 60 Gew.-% wässrigen Dispersion der Silikonverbindung nach Beispiel 2 aus EP-A 0 738 747 (C.1)
2 Gew.-% Ruß,
0,5 Gew.-% eines Verdickungsmittels auf Polyurethanbasis,
1 Gew.-% Mikrohohlkugeln, mittlerer Durchmesser 20 µm, aus Polyvinylidenchlorid, gefüllt mit Isobutan,
15 Gew.-% Kieselgel.

Man erhielt erfindungsgemäße wässrige Dispersion Disp.3 mit einem Feststoffgehalt von 30% und einer kinematischen Viskosität von 25 Sek. bei 23°C, bestimmt nach DIN EN ISO 2431, Stand Mai 1996.

Man vermischte in einem Rührgefäß unter Rühren:
10 Gew.-% einer wässrigen Dispersion (Partikeldurchmesser: 125 nm) eines thermoplastischen Polyurethans (A1.1), hergestellt aus Hexamethyldiisocyanat (a1.1) und Isophorondiisocyanat (a1.2) im Gew.-Verhältnis 13:10 als Diisocyanate und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), 3 Gew.-% einfach methyliertem Polyethylenglykol (c.1) sowie 3 Gew.-% H₂N-CH₂CH₂-NH-CH₂CH₂-COOH, Gew.-% jeweils bezogen auf Polyesterdiol (b1.1), Erweichungspunkt von 62°C, Erweichung beginnt bei 55°C, Shore-Härte A 54,
60 Gew.-% einer wässrigen Dispersion (Partikeldurchmesser: 150 nm) eines harten Polyurethans (A2.2), erhältlich durch Umsetzung von Isophorondiisocyanat, 1,4-Butandiol, 1, 1-Dimethylolpropionsäure, Hydrazinhydrat und Polypropylenglykol mit einem Molekulargewicht M_{w} von 4200 g/mol, Erweichungspunkt von 195°C, Shore-Härte A 86,
3,5 Gew.-% einer 70 Gew.-% (in Propylencarbonat) Lösung von Verbindung (B.1) (s.o.), NCO-Gehalt 12%,
6 Gew.-% einer 60 Gew.-% wässrigen Dispersion der Silikonverbindung nach Beispiel 2 aus EP-A 0 738 747 (C.1)
2 Gew.-% Ruß,
0,5 Gew.-% eines Verdickungsmittels auf Polyurethanbasis,
1 Gew.-% Mikrohohlkugeln, mittlerer Durchmesser 20 µm, aus Polyvinylidenchlorid, gefüllt mit Isobutan,
15 Gew.-% Kieselgel.

Man erhielt erfindungsgemäße wässrige Dispersion Disp.4 mit einem Feststoffgehalt von 30% und einer kinematischen Viskosität von 25 Sek. bei 23°C, bestimmt nach DIN EN ISO 2431, Stand Mai 1996.

### VI.2 Auftragung von erfindungsgemäßen Dispersionen auf flächigen Körper aus II.

Der flächige Körper aus II. wurde auf eine beheizbare Unterlage gelegt und auf 80°C erwärmt. Anschließend wurde durch mehrere Sprühdüsen Disp.3 bzw. Disp.4 aufgesprüht, und zwar 80 g/m² (nass). Man ließ bei 80°C verfestigen, bis die Oberfläche nicht mehr klebrig war. Man erhielt mit einer Deckschicht beschichtete flächige Körper.

Auf den mit einer Deckschicht beschichteten flächigen Körper aus VI. brachte man durch Sprühdüsen analog zu V. WF.1 bzw. WF.2 auf, und zwar in jedem Falle 50 g/m² (nass). Man ließ in einem Lufttrockner bei 80°C trocknen, bis die Oberfläche nicht mehr klebrig war. Man erhielt mit einer Deckschicht und einer Verbindungsschicht beschichtete flächige Körper.

Auf Vliesstoff wurde WF.1 bzw. WF.2 aufgetragen, und zwar in jedem Falle 50 g/m² (nass). Man lagerte zwei Minuten bei Zimmertemperatur, danach fühlten sich die beschichteten Vliesstoffe trocken an.

Anschließend legte man die beschichteten Vliesstoffe mit der Beschichtung nach unten auf den mit einer Deckschicht und einer Verbindungsschicht beschichteten flächigen Körper und presste in einer beheizten Presse (90°C) mit Hilfe von druckelastischen Abstützen bei einem Druck von 2 bar über einen Zeitraum von 15 Sekunden. Man erhielt erfindungsgemäßen beschichteten Vliesstoff VS.1 und VS.2.

Der flächige Körper (unbeschichtet) ließ sich leicht und rückstandsfrei von erfindungsgemäßem beschichtetem Vüesstoff VS.1 bzw. VS.2 entfernen und sofort wieder verwenden. Erfindungsgemäß beschichtete Vliesstoffe VS.1 und VS.2 waren elastisch, atmungsaktiv, dimensionsstabil und hatten einen sehr guten Griff.

## Patentansprüche

1. Wässrige Dispersion, enthaltend
(A) mindestens ein Polyurethan,
(B) mindestens eine Verbindung der allgemeinen Formel I a oder I b 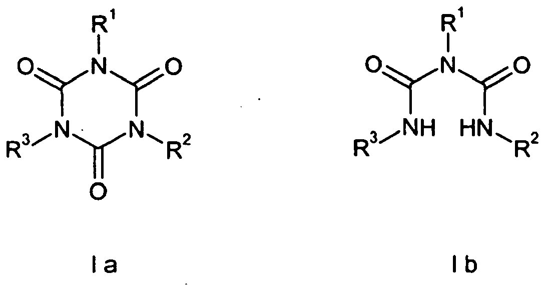
wobei R¹, R² und R³ gleich oder verschieden sein können und gewählt werden aus A¹-NCO und A¹-NH-CO-X, wobei
A¹ ein Spacer mit 2 bis 20 C-Atomen ist und
X gewählt wird O(AO)ₓR⁴,
AO ist C₂-C₄-Alkylenoxid,
x ist eine ganze Zahl im Bereich von 1 bis 50 und
R⁴ ist gewählt aus Wasserstoff und C₁-C₃₀-Alkyl,
(C) und mindestens eine Silikonverbindung mit reaktiven Gruppen,
wobei Silikonverbindung (C) gewählt wird aus Silikonverbindungen mit ein bis vier Aminogruppen pro Molekül, Silikonverbindungen mit ein bis vier Aminoalkylaminogruppen pro Molekül und Silikonverbindungen mit ein bis vier COOH-Gruppen pro Molekül.

2. Wässrige Dispersion nach Anspruch 1, **dadurch gekennzeichnet, dass** AO gewählt wird aus Ethylenoxid und Propylenoxid.

3. Wässrige Dispersionen nach Anspruch 1 oder 2, **dadurch gekennzeichnet, dass** sie zusätzlich
(D) mindestens ein Polydi-C₁-C₄-Alkylsiloxan enthalten, das weder Aminogruppen noch COOH-Gruppen aufweist.

4. Wässrige Dispersionen nach einem der Ansprüche 1 bis 3, **dadurch gekennzeichnet, dass** A¹ gewählt wird aus Phenylen, Toluylen und C₂-C₁₂-Alkylen.

5. Verwendung von wässrigen Dispersionen nach einem der Ansprüche 1 bis 4 zur Herstellung von mehrschichtigen flächigen Substraten.

6. Verfahren zur Herstellung von mehrschichtigen flächigen Substraten unter Verwendung von wässrigen Dispersionen nach einem der Ansprüche 1 bis 4.

7. Verfahren nach Anspruch 6, **dadurch gekennzeichnet, dass** man in einem ersten Schritt einen flächigen Körper aus einem Silikon herstellt, den man in einem zweiten Schritt mit einer Struktur versieht, im dritten Schritt trägt man wässrige Dispersion nach einem der Ansprüche 1 bis 4 auf den strukturierten Körper auf und härtet aus, und man überträgt in einem vierten Schritt die Schicht aus den vorstehend genannten Schritten auf ein flächiges Substrat.

8. Mehrschichtiges flächiges Substrat, hergestellt nach einem Verfahren nach einem der Ansprüche 6 oder 7.

9. Mehrschichtiges flächiges Substrat nach Anspruch 9, **dadurch gekennzeichnet, dass** flächiges Substrat gewählt wird aus Kunststofffolien, Leder, Kunstleder, Textil und Formkörpern aus Kunststoff.

10. Verwendung von mehrschichtigen flächigen Substraten nach Anspruch 8 oder 9 zur Herstellung von Automobilinnenteilen, Schuhen, Textilien und Möbeln.

11. Automobilinnenteile, Schuhe, Textilien und Möbel, hergestellt unter Verwendung von mehrschichtigen flächigen Substraten nach Anspruch 8 oder 9.

## Claims

1. An aqueous dispersion comprising
(A) at least one polyurethane,
(B) at least one compound of the general formula I a or I b 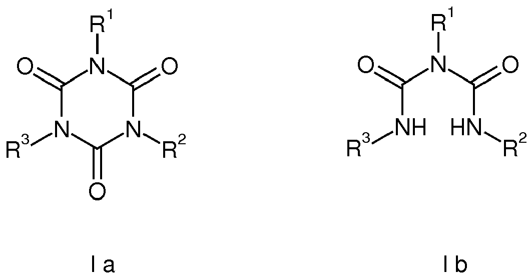
in which R¹, R² and R³ may be identical or different and are selected from A¹-NCO and A¹-NH-CO-X, in which
A¹ is a spacer having 2 to 20 carbon atoms and X is selected to be O(AO)ₓR⁴,
AO is C₂-C₄-alkylene oxide,
x is an integer in the range from 1 to 50 and
R⁴ is selected from hydrogen and C₁-C₃₀-alkyl,
(C) and at least one silicone compound having reactive groups,
said silicone compound (C) is selected from silicone compounds having one to four amino groups per molecule, silicone compounds having one to four aminoalkylamino groups per molecule and silicone compounds having one to four COOH groups per molecule.

2. The aqueous dispersion according to claim 1, wherein AO is selected from ethylene oxide and propylene oxide.

3. The aqueous dispersion according to claim 1 or 2, which additionally comprises
(D) at least one polydi-C₁-C₄-alkylsiloxane which has neither amino groups nor COOH groups.

4. The aqueous dispersion according to any of claims 1 to 3, wherein A¹ is selected from phenylene, toluylene and C₂-C₁₂-alkylene.

5. The use of aqueous dispersions according to any of claims 1 to 4 for the production of multilayer sheet-like substrates.

6. A process for the production of multilayer sheet-like substrates using aqueous dispersions according to any of claims 1 to 4.

7. The process according to claim 6, wherein a sheet-like body is produced from a silicone in a first step and is provided with a structure in a second step, aqueous dispersion according to any of claims 1 to 4 is applied to the structured body in the third step and the layer from the abovementioned steps is transferred onto a sheet-like substrate in a fourth step.

8. A multilayer sheet-like substrate produced by a process according to either of claims 6 and 7.

9. The multilayer sheet-like substrate according to claim 8, wherein the sheet-like substrate is selected from plastic films, leather, imitation leather, textile and moldings comprising plastic.

10. The use of multilayer sheet-like substrates according to claim 8 or 9 for the production of interior automobile parts, shoes, textiles and pieces of furniture.

11. An interior automobile part, shoe, textile or piece of furniture produced using multilayer sheet-like substrates according to claim 8 or 9.

## Revendications

1. Dispersion aqueuse, contenant
(A) au moins un polyuréthane,
(B) au moins un composé de formule générale I a ou I b 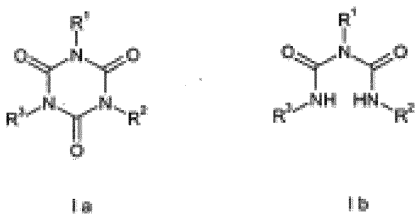
où R¹, R² et R³ peuvent être identiques ou différents et sont choisis parmi A¹-NCO et A¹-NH-CO-X,
A¹ étant un espaceur ayant de 2 à 20 atomes de carbone et
X étant choisi comme étant O(AO)ₓR⁴,
AO étant un oxyde d'alkylène en C₂-C₄,
x étant un nombre entier dans la plage de 1 à 50 et
R⁴ étant choisi parmi un atome d'hydrogène et un groupe alkyle en C₁-C₃₀,
(C) et au moins un composé silicone à groupes réactifs,
le composé silicone (C) étant choisi parmi des composés silicone comportant un à quatre groupes amino par molécule, des composés silicone comportant un à quatre groupes aminoalkylamino par molécule et des composés silicone comportant un à quatre groupes COOH par molécule.

2. Dispersions aqueuses selon la revendication 1, **caractérisées en ce que** AO est choisi parmi l'oxyde d'éthylène et l'oxyde de propylène.

3. Dispersions aqueuses selon la revendication 1 ou 2, **caractérisées en ce qu'**elles contiennent en plus
(D) au moins un polydialkyl(C₁-C₄)siloxane qui ne comporte ni groupes amino ni groupes COOH.

4. Dispersions aqueuses selon l'une quelconque des revendications 1 à 3, **caractérisées en ce que** A¹ est choisi parmi les groupes phénylène, toluylène et alkylène en C₂-C₁₂.

5. Utilisation de dispersions aqueuses selon l'une quelconque des revendications 1 à 4, pour la production de supports plats multicouches.

6. Procédé pour la production de supports plats multicouches avec utilisation de dispersions aqueuses selon l'une quelconque des revendications 1 à 4.

7. Procédé selon la revendication 6, **caractérisé en ce que** dans une première étape on produit un corps plat à base d'un silicone, que l'on munit d'une texture dans une deuxième étape, dans la troisième étape on applique sur le corps texturé une dispersion aqueuse selon l'une quelconque des revendications 1 à 4 et on la fait durcir, et dans une quatrième étape on transfère sur un support plat la couche provenant des étapes nommées précédemment.

8. Support plat multicouche, produit conformément à un procédé selon l'une quelconque des revendications 6 ou 7.

9. Support plat multicouche selon la revendication 8, **caractérisé en ce que** le support plat est choisi parmi des films en matière plastique, le cuir, le cuir synthétique, un textile et des articles moulés à base de matière plastique.

10. Utilisation de supports plats multicouches selon la revendication 8 ou 9, pour la fabrication de pièces intérieures d'automobiles, de chaussures, de textiles et de meubles.

11. Pièces intérieures d'automobiles, chaussures, textiles et meubles, fabriqués avec utilisation de supports plats multicouches selon la revendication 8 ou 9.
